# EUROPÄISCHE PATENTSCHRIFT

(11) **EP 3 538 419 B1**
(45) Veröffentlichungstag und Bekanntmachung des Hinweises auf die Patenterteilung: **30.12.2020**
(21) Anmeldenummer: 17797135.5
(22) Anmeldetag: 08.11.2017
(51) Int. Cl.: B62D 5/04, B62D 3/12

(54) **VERFAHREN ZUR VEREINFACHTEN MONTAGE EINES ZAHNSTANGENLENKGETRIEBES EINER ZAHNSTANGENLENKUNG**
METHOD FOR THE SIMPLIFIED ASSEMBLY OF A RACK-AND-PINION STEERING BOX OF A RACK-AND-PINION STEERING SYSTEM
PROCÉDÉ POUR SIMPLIFIER LE MONTAGE D'UN MÉCANISME DE DIRECTION À CRÉMAILLÈRE

(30) Priorität: 09.11.2016 DE 102016013272
(43) Veröffentlichungstag der Anmeldung: 18.09.2019
(73) Patentinhaber: thyssenkrupp Presta AG, 9492 Eschen (LI); thyssenkrupp AG, 45143 Essen (DE)
(72) Erfinder: STECK, Philippe, 9487 Gamprin-Bendern (LI); BAUMGARTNER, Patrick, 9000 St. Gallen (CH)
(74) Vertreter: thyssenkrupp Intellectual Property GmbH
(86) Internationale Anmeldenummer: PCT/EP2017/078536
(87) Internationale Veröffentlichungsnummer: WO 2018/087112

(56) Entgegenhaltungen:
- JP-A- 2009 120 094
- JP-A- 2015 178 295
- US-A1- 2012 233 860
- US-A1- 2013 180 794
- US-A1- 2015 266 506

## Beschreibung

Die vorliegende Erfindung betrifft ein Verfahren zur Montage eines Zahnstangenlenkgetriebes einer Zahnstangenlenkung mit den Merkmalen des Oberbegriffs des Anspruchs 1 und eine Zahnstangenlenkung für ein Kraftfahrzeug mit den Merkmalen des Oberbegriffs des Anspruchs 4.

Gattungsgemäße Zahnstangenlenkungen weisen eine in einem Lenkgetriebegehäuse linear beweglich geführte Zahnstange und ein drehbar gelagertes Lenkritzel auf, das mit der Zahnstange in Eingriff steht. Das von einem Fahrer auf ein Lenkrad ausgeübte Lenkdrehmoment wird über eine Lenkwelle auf eine Eingangswelle des Lenkgetriebes übertragen. Die Eingangswelle des Lenkgetriebes ist mit einem Lenkritzel verbunden, das mit der Zahnstange kämmt. Eine Drehung der Eingangswelle und des Lenkritzels wird über den Zahneingriff der Zahnstange in eine Linearbewegung der Zahnstange umgewandelt. An der Zahnstange sind Spurstangen angelenkt, mit deren Hilfe die gelenkten Räder um einen Einschlagwinkel verstellt werden. Die Drehung des Lenkrades wird so in eine Lenkbewegung der gelenkten Räder umgesetzt. Bei elektrisch unterstützten Zahnstangenlenkungen ist ein Servomotor vorgesehen, der beispielsweise mittels eines mechanischen Untersetzungsgetriebes mit Schnecke und Schneckenrad auf das Lenkritzel einwirkt und somit den Fahrer bei einem Lenkmanöver unterstützt. Der Servomotor ist dabei zwischen der Eingangswelle und dem Lenkritzel angeordnet. Diese Anordnung kann sich allerdings als nachteilig erweisen, da das Lenkritzel und Zahnstange nur schwer in Wirkverbindung gebracht werden können.

Aus der US 2015/266506 A1 und der US 2012/233860 A1 sind derartige gattungsgemäße Zahnstangenlenkgetriebe bekannt, die jedoch keine alternative Anordnung des Untersetzungsgetriebes ermöglichen.

Es ist deshalb Aufgabe der vorliegenden Erfindung, ein vereinfachtes Verfahren zur Montage eines Zahnstangenlenkgetriebes einer Zahnstangenlenkung für ein Kraftfahrzeug anzugeben.

Demnach ist ein Verfahren zur Montage eines Zahnstangenlenkgetriebes einer Zahnstangenlenkung vorgesehen, wobei die Zahnstangenlenkung eine mit einer Lenkwelle verbundene Ritzelwelle mit einem Lenkritzel aufweist, welches mit einer Zahnstange zur Verschwenkung von lenkbaren Rädern in Eingriff steht, , wobei die Zahnstangenlenkung einen Elektromotor aufweist, der die Ritzelwelle über ein Untersetzungsgetriebe antreibt, wobei die Lenkwelle, die Ritzelwelle mit dem Lenkritzel und das Untersetzungsgetriebe eine Gesamtanordnung bilden, welche in einem Lenkgetriebegehäuse aufgenommen ist, und wobei die Ritzelwelle zwischen dem Lenkritzel und einem lenkwellenfernen Ende eine Verjüngung aufweist, deren Durchmesser geringer ist als der des Lenkritzels, wobei das Verfahren folgenden Verfahrensschritte umfasst:
a) Einbringen der Ritzelwelle in eine dafür vorgesehene Gehäuseöffnung des Lenkgetriebegehäuses und zwar soweit, das sich der Bereich der Verjüngung der Ritzelwelle auf Höhe der einzusetzenden Zahnstange befindet
b) Einbringen der Zahnstange in die dafür vorgesehene Gehäuseöffnung des Lenkgetriebegehäuses, wobei die Zahnstange an der Verjüngung der Ritzelwelle bis in eine Sollposition vorbei geschoben wird
c) Bewegen der Ritzelwelle weiter hinein in das Lenkgetriebegehäuse bis zu einer Endposition, so dass ein Verzahnungsbereich der Zahnstange in Eingriff mit der Verzahnung des Lenkritzels kommt.

Das Lenkgetriebe ist somit besonders einfach zu montieren, da das Ritzel und die Zahnstange nacheinander in das Gehäuse eingebracht werden können. Zudem hat dieses Verfahren den Vorteil, dass das Lenkgetriebegehäuse einstückig ausgestaltet sein kann.

Es ist bevorzugt, wenn der Durchmesser der Verjüngung geringer ist als der des Lenkritzels und der restlichen Ritzelwelle, so kann sichergestellt werden, dass die Zahnstange an der Ritzelwelle vorbei geschoben werden kann.

Weiterhin vorteilhaft ist es, wenn die Verjüngung sich unmittelbar an das Lenkritzel auf der Ritzelwelle anschließt. Die Ritzelwelle kann somit bereits sehr weit in das Gehäuse in Schritt a) eingebracht werden und muss in Schritt c) nur noch geringfügig bewegt werden um den Eingriff herzustellen.

Vorzugsweise ist die Ritzelwelle in einem Lager drehbar in dem Lenkgetriebegehäuse gelagert ist, wobei die Verjüngung zwischen dem Lenkritzel und dem Lager angeordnet ist.

In einer bevorzugten Ausführungsform ist vorgesehen, dass nach dem Schritt c) das Untersetzungsgetriebe am lenkwellenfernen Ende der Ritzelwelle in das Lenkgetriebegehäuse eingebracht wird. Die Montage des Untersetzungsgetriebes ist somit ebenfalls besonders einfach.

Weiterhin ist eine Zahnstangenlenkung für ein Kraftfahrzeug vorgesehen, umfassend eine mit einer Lenkwelle verbundene Ritzelwelle, die ein Lenkritzel aufweist, welches mit einer in einem Gehäuse entlang einer Längsachse verschieblich gelagerten Zahnstange zur Verschwenkung von lenkbaren Rädern in Eingriff steht, wobei die Lenkwelle, die Ritzelwelle mit dem Lenkritzel und das Untersetzungsgetriebe eine Gesamtanordnung bilden, welche in einem Lenkgetriebegehäuse aufgenommen ist, und mit einem Elektromotor, der die Ritzelwelle über ein Untersetzungsgetriebe antreibt, wobei die Ritzelwelle zwischen dem Lenkritzel und einem lenkwellenfernen Ende eine Verjüngung aufweist, deren Durchmesser geringer ist als der des Lenkritzels, derart, dass bei der Montage des Zahnstangenlenkgetriebes die Zahnstange an der Verjüngung der Ritzelwelle vorbei, in eine Endposition in das Lenkgetriebegehäuse geschoben werden kann, wobei die Ritzelwelle zwischen dem Lenkritzel und dem Untersetzungsgetriebe in einem Lager drehbar in dem Lenkgetriebegehäuse gelagert ist, wobei erfindungsgemäß die Ritzelwelle zwischen dem Lenkritzel und dem Lager die Verjüngung aufweist, deren Durchmesser geringer ist als der des Lenkritzels und eines Lagersitzes des Lagers. Wie oben bereits dargestellt, ergibt sich daraus der Vorteil, dass die Montage des Lenkgetriebes besonders einfach ist.

Erfindungsgemäß ist die Ritzelwelle zwischen dem Lenkritzel und dem Untersetzungsgetriebe in einem Lager drehbar in dem Lenkgetriebegehäuse gelagert. Es ist weiterhin bevorzugt, wenn die Ritzelwelle zwischen dem Lenkritzel und dem Lager die Verjüngung aufweist, deren Durchmesser geringer ist als der des Lenkritzels und eines Lagersitzes des Lagers, so wird sichergestellt, dass die Zahnstange an der Ritzelwelle vorbei in das Gehäuse geschoben werden kann. Vorzugsweise schließt sich die Verjüngung unmittelbar an das Lenkritzel auf der Ritzelwelle an. In einer bevorzugten Ausführungsform der Erfindung ist der Durchmesser der Verjüngung geringer als der Durchmesser des Lenkritzels und der restlichen Ritzelwelle.

In der erfindungsgemäßen Ausführungsform sind der Elektromotor und das Untersetzungsgetriebe auf der Unterseite des Lenkgetriebes am lenkwellenfernen Ende der Ritzelwelle angeordnet. Dabei benötigt der Antrieb besonders wenig Bauraum.

Es ist weiterhin vorteilhaft, wenn die Ritzelwelle an ihrem lenkwellennahen Ende mit einem Torsionsstab verbunden ist, der die Ritzelwelle mit einer Eingangswelle verbindet, wobei der Torsionsstab Teil eines Drehmomentsensors ist, der das zur Ansteuerung des Elektromotors benötigte an einem Lenkrad aufgebrachte Lenkmoment bestimmt und wobei das Untersetzungsgetriebe und der Elektromotor auf der gegenüberliegenden Seite der Zahnstange von dem Drehmomentsensor angeordnet sind. Das Untersetzungsgetriebe und der Elektromotor sind somit auf der lenkwellenfernen Seite der Ritzelwelle vorgesehen und liegen somit unterhalb der Zahnstange näher zur Fahrbahn, was besonders platzsparend ist.

In einer bevorzugten Ausführungsform ist das Untersetzungsgetriebe ein Schneckengetriebe, wobei ein Schneckenrad des Schneckengetriebes die Ritzelwelle konzentrisch umgibt und mit dieser drehfest verbunden ist.

Vorzugsweise ist das Lenkgetriebegehäuse einteilig mit dem Antriebgetriebegehäuse, in dem das Untersetzungsgetriebe aufgenommen ist, ausgestaltet.

Durch ein einteiliges Gehäuse kann auf problematische Dichtungen verzichtet und Gewicht gespart werden.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung einer Zahnstangenlenkung,
- Fig. 2:: eine räumliche Ansicht des Lenkgetriebes aus Fig. 1,
- Fig. 3:: eine detaillierte Darstellung des Eingriffs Zahnstange mit einem Lenkritzel,
- Fig. 4 bis 7:: Längsschnitte der Zahnstangenlenkung zu den einzelnen Verfahrensschritten bei der Montage, sowie
- Fig. 8:: eine räumliche Ansicht einer Zahnstangen- Dualpinion-Lenkung.

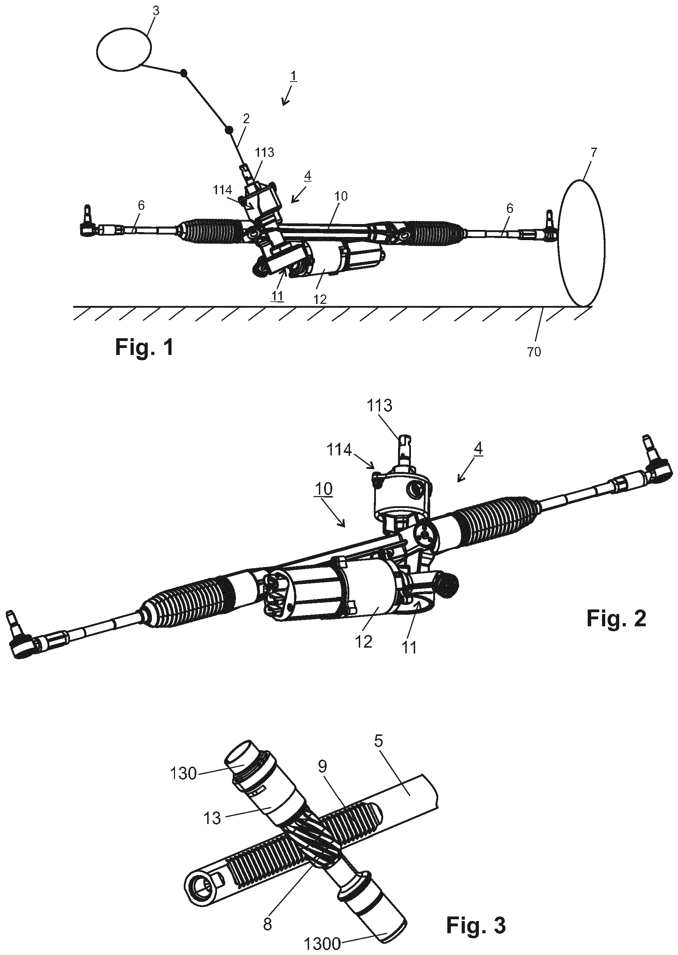

In der Figur 1 ist schematisch eine Zahnstangenlenkung 1 eines Kraftfahrzeuges gezeigt. Eine Lenkwelle 2 dient der Übertragung der von einem Fahrer des Kraftfahrzeugs an einem Lenkrad 3 ausgeführten Lenkbewegungen auf ein Zahnstangenlenkgetriebe 4. Das Zahnstangenlenkgetriebe 4 setzt die Drehbewegung der Lenkwelle 2 in eine Bewegung einer Zahnstange 5 um, wodurch das an einer Spurstange 6 angelenkte Rad 7 des Fahrzeugs einen Lenkeinschlag ausführt. Die Drehbewegung der Lenkwelle 2 wird über ein Lenkritzel 8, dass mit der Zahnstange 5 in einem Verzahnungsbereich 9 kämmt, in eine translatorische Bewegung der Zahnstange 5 umgesetzt. Die Zahnstange 5 ist in einem Lenkgetriebegehäuse 10 axial beweglich gelagert. Auf der lenkwellenfernen Seite der Zahnstange 5 sind ein Untersetzungsgetriebe 11 und ein elektrischer Servomotor 12 angeordnet. Der Servomotor 12 wirkt über das Untersetzungsgetriebe 11 auf das Lenkritzel 8 zur Lenkunterstützung.

In der Figur 2 ist in einer zweiten Ansicht die Lage des Untersetzungsgetriebes 11 und des Servomotors 12 unterhalb der Zahnstange 5, also näher zur Fahrbahn 70 liegend, dargestellt.

Die Figur 3 zeigt den Eingriff des Lenkritzels 8 in den Verzahnungsbereich 9 der Zahnstange 5. Das Lenkritzel 8 ist auf einer Ritzelwelle 13 angeordnet, die ein lenkwellennahes Ende 130 und ein lenkwellenfernes Ende 1300 aufweist.

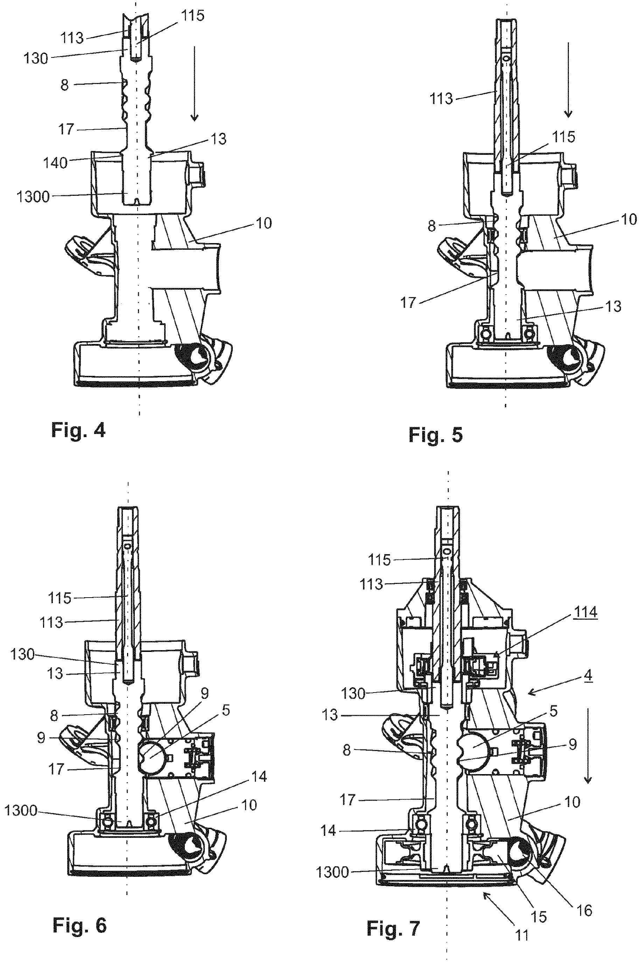

Wie Figur 7 zeigt, ist in einem montierten Zustand des Zahnstangenlenkgetriebes 4 das lenkwellennahe Ende 130 mit einem Torsionsstab 115 verbunden, der die Ritzelwelle 13 mit einer Eingangswelle 113 verbindet, die wiederrum mit dem Lenkrad 3 über die Lenkwelle 2 drehfest in Verbindung steht. Der Torsionsstab 115 bewirkt in Abhängigkeit vom Lenkraddrehmoment eine relative Verdrehung zwischen der Eingangswelle 113 und der Ritzelwelle 13. Der Torsionsstab 115 ist Teil eines Drehmomentsensors 114, der das zur Ansteuerung des Elektromotors 12 benötigte am Lenkrad 3 aufgebrachte Lenkmoment bestimmt. Die Ritzelwelle 13 ist zwischen dem Lenkritzel 8 und dem lenkwellenfernen Ende 1300 in einem Lager 14 drehbar in dem Lenkgetriebegehäuse 10 gelagert. Am lenkwellenfernen Ende 1300 der Ritzelwelle 13 ist ein Schneckenrad 15 des Untersetzungsgetriebes 11 vorgesehen, dass die Ritzelwelle 13 konzentrisch umgibt und mit dieser drehfest verbunden ist. Der hier nicht dargestellte elektrische Servomotor treibt eine Schneckenwelle 16 an, die mit dem auf der Ritzelwelle 13 angeordneten Schneckenrad 15 kämmt. Da das Schneckengetriebe 11 am lenkwellenfernen Ende 1300 der Ritzelwelle 13 und somit unterhalb des Eingriffs zwischen der Zahnstange 5 und dem Ritzel 8 liegend angeordnet ist, kann der Servomotor ebenfalls auf der Unterseite des Lenkgetriebes 4 angebracht werden, was besonders platzsparend ist. Als Unterseite ist dabei die Seite des Lenkgetriebes 4 in Richtung der Fahrbahn 70 zu verstehen.

Zwischen Lenkritzel 8 und Lager 14 weist die Ritzelwelle 13 eine Verjüngung 17 auf, deren Durchmesser geringer ist als der des Lenkritzels 8 und eines Lagersitzes 140 des Lagers 14. Der Durchmesser der Verjüngung 17 ist weiterhin kleiner als die restliche Ritzelwelle 13. Die Verjüngung 17 schließt sich bevorzugt unmittelbar an das Lenkritzel 8 an.

Die Figuren 4 bis 7 zeigen die Montage des Zahnstangenlenkgetriebes 4 in mehreren Schritten. In einem ersten Schritt wird die Eingangswelle 113 mit Torsionsstab 115 und Lenkritzel 13 in eine dafür vorgesehene Gehäuseöffnung des Lenkgetriebegehäuses 10 geschoben und zwar soweit, das sich der Bereich der Verjüngung 17 der Ritzelwelle 13 auf Höhe der einzusetzenden Zahnstange 5 befindet und das lenkwellenferne Ende 1300 der Ritzelwelle 13 vom Lager 14 umgeben ist. In einem zweiten Schritt wird die Zahnstange 5 in die entsprechend dafür vorgesehene Gehäuseöffnung eingeschoben. Die Zahnstange 5 kann an der Verjüngung 17 der Ritzelwelle 13 vorbei geschoben werden bis in eine Sollposition. Die Ritzelwelle 13 wird anschließend nach unten, weiter hinein in das Lenkgetriebegehäuse 10 bis zu einer Endposition gedrückt, so dass der Verzahnungsbereich 9 der Zahnstange 5 in Eingriff mit der Verzahnung des Lenkritzels 8 kommt. Das Lager 14 befindet sich somit auf dem Lagersitz 140 der Ritzelwelle 13 und an dem lenkwellenfernen Ende 1300 der Ritzelwelle 13 kann das Schneckenrad 15 befestigt werden. Der Zahnstangen-Ritzelmechanismus kann so besonders einfach in dem Lenkgetriebegehäuse 10 montiert werden. Nachdem das Lenkgetriebe montiert ist, wird die Schnecke 16 in eine dafür vorgesehene Öffnung des Antriebsgetriebegehäuses eingebracht. Anschließend wird das Lager 14 auf den Lagersitz 140 der Ritzelwelle 13 angeordnet und das Schneckenrad 15 auf der Ritzelwelle 13 drehfest befestigt. Nachfolgend wird der Drehmomentsensor 114 von oben in das Lenkgetriebegehäuse 10 eingesetzt.

Das Lenkgetriebegehäuse 10 ist bevorzugt einteilig mit dem Antriebsgetriebegehäuse, in dem das Untersetzungsgetriebe aufgenommen ist, ausgestaltet und aus Aluminium oder Magnesium hergestellt. Das einteilige Design hat den Vorteil, dass die Dichtstelle von Antriebsgetriebegehäuse zu Lenkgetriebegehäuse entfällt. Zudem ist ein einteiliges Gehäuse sehr kosteneffizient herzustellen und es bringt deutliche Gewichtsersparnis.

Es kann auch vorgesehen sein, dass Untersetzungsgetriebe, wie herkömmlicherweise vorgesehen, oberhalb der Zahnstange bzw. auf der lenkwellennahen Seite des Ritzels 8 anzuordnen, wobei der Servomotor üblicherweise zwischen der Eingangswelle und dem Lenkritzel angeordnet ist.

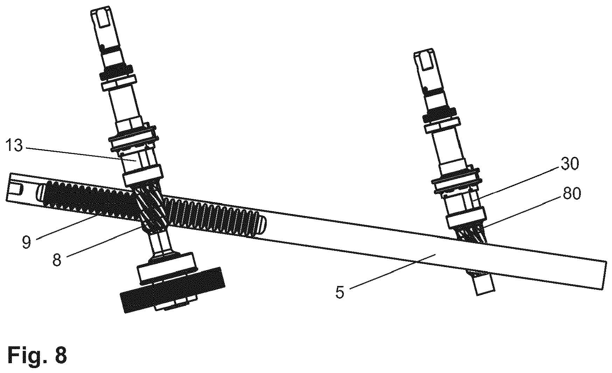

Es kann auch vorgesehen sein, wie in Figur 8 dargestellt, dass in dem Getriebegehäuse 10 die Zahnstange 5 mit einem zweiten Lenkritzel 80 einer zweiten Ritzelwelle 30 kämmt.

## Patentansprüche

1. Verfahren zur Montage eines Zahnstangenlenkgetriebes einer Zahnstangenlenkung, welche eine mit einer Lenkwelle (2) verbundene Ritzelwelle (13) mit einem Lenkritzel (8) aufweist, welches mit einer Zahnstange (5) zur Verschwenkung von lenkbaren Rädern (7) in Eingriff steht, und wobei die Zahnstangenlenkung einen Elektromotor (12) aufweist, der die Ritzelwelle (13) über ein Untersetzungsgetriebe (11) antreibt, **dadurch gekennzeichnet, dass** die Lenkwelle (2), die Ritzelwelle (13) mit dem Lenkritzel (8) und das Untersetzungsgetriebe (11) eine Gesamtanordnung bilden, welche in einem Lenkgetriebegehäuse (10) aufgenommen ist, wobei die Ritzelwelle (13) zwischen dem Lenkritzel (8) und einem lenkwellenfernen Ende (1300) eine Verjüngung (17) aufweist, deren Durchmesser geringer ist als der des Lenkritzels (8), wobei folgende Verfahrensschritte vorgesehen sind:
a) Einbringen der Ritzelwelle (13) in eine dafür vorgesehene Gehäuseöffnung des Lenkgetriebegehäuses (10) und zwar soweit, das sich der Bereich der Verjüngung (17) der Ritzelwelle (13) auf Höhe der einzusetzenden Zahnstange (5) befindet
b) Einbringen der Zahnstange (5) in die dafür vorgesehene Gehäuseöffnung des Lenkgetriebegehäuses (10), wobei die Zahnstange (5) an der Verjüngung (17) der Ritzelwelle (13) bis in eine Sollposition vorbei geschoben wird
c) Bewegen der Ritzelwelle (13) weiter hinein in das Lenkgetriebegehäuse (10) bis zu einer Endposition, so dass ein Verzahnungsbereich (9) der Zahnstange (5) in Eingriff mit der Verzahnung des Lenkritzels (8) kommt.

2. Verfahren nach Anspruch 1, **dadurch gekennzeichnet, dass** der Durchmesser der Verjüngung (17) geringer ist als der Durchmesser der restlichen Ritzelwelle (13).

3. Verfahren nach einem der vorhergehenden Ansprüche, **dadurch gekennzeichnet, dass** nach dem Schritt c) das Untersetzungsgetriebe (11) am lenkwellenfernen Ende (1300) der Ritzelwelle (13) in das Lenkgetriebegehäuse (10) eingebracht wird.

4. Zahnstangenlenkung für ein Kraftfahrzeug, umfassend, eine mit einer Lenkwelle (2) verbundene Ritzelwelle (13), die ein Lenkritzel (8) aufweist, welches mit einer in einem Gehäuse (10) entlang einer Längsachse verschieblich gelagerten Zahnstange (5) zur Verschwenkung von lenkbaren Rädern (7) in Eingriff steht, und mit einem Elektromotor (12), der die Ritzelwelle (13) über ein Untersetzungsgetriebe (11) antreibt, wobei die Lenkwelle (2), die Ritzelwelle (13) mit dem Lenkritzel (8) und das Untersetzungsgetriebe (11) eine Gesamtanordnung bilden, welche in einem Lenkgetriebegehäuse (10) aufgenommen ist, wobei die Ritzelwelle (13) zwischen dem Lenkritzel (8) und einem lenkwellenfernen Ende (1300) eine Verjüngung (17) aufweist, deren Durchmesser geringer ist als der des Lenkritzels (8), derart, dass bei der Montage des Zahnstangenlenkgetriebes (4) die Zahnstange (5) an der Verjüngung (17) der Ritzelwelle (13) vorbei, in eine Endposition in das Lenkgetriebegehäuse (10) geschoben werden kann, wobei die Ritzelwelle (13) zwischen dem Lenkritzel (8) und dem Untersetzungsgetriebe (11) in einem Lager (14) drehbar in dem Lenkgetriebegehäuse (10) gelagert ist, **dadurch gekennzeichnet, dass** die Ritzelwelle (13) zwischen dem Lenkritzel (8) und dem Lager (14) die Verjüngung (17) aufweist, deren Durchmesser geringer ist als der des Lenkritzels (8) und eines Lagersitzes (140) des Lagers (14).

5. Zahnstangenlenkung nach Anspruch 4, **dadurch gekennzeichnet, dass** die Verjüngung (17) sich unmittelbar an das Lenkritzel (8) auf der Ritzelwelle (13) anschließt.

6. Zahnstangenlenkung nach Anspruch 4, **dadurch gekennzeichnet, dass** der Durchmesser der Verjüngung (17) geringer ist als der Durchmesser der restlichen Ritzelwelle (13).

7. Zahnstangenlenkung nach einem der Ansprüche 4 bis 6, **dadurch gekennzeichnet, dass** der Elektromotor (9) und das Untersetzungsgetriebe (11) auf der Unterseite des Lenkgetriebes (4) am lenkwellenfernen Ende (1300) angeordnet sind.

8. Zahnstangenlenkung nach einem der Ansprüche 4 bis 7, **dadurch gekennzeichnet, dass** die Ritzelwelle (13) an ihrem lenkwellennahen Ende (130) mit einem Torsionsstab (115) verbunden ist, der die Ritzelwelle (13) mit einer Eingangswelle (113) verbindet, wobei der Torsionsstab (115) Teil eines Drehmomentsensors (114) ist, der das zur Ansteuerung des Elektromotors (9) benötigte an einem Lenkrad (3) aufgebrachte Lenkmoment bestimmt und wobei das Untersetzungsgetriebe (11) und der Elektromotor (9) auf der gegenüberliegenden Seite der Zahnstange (5) von dem Drehmomentsensor (114) angeordnet sind.

9. Zahnstangenlenkung nach einem der Ansprüche 4 bis 8, **dadurch gekennzeichnet, dass** das Untersetzungsgetriebe (11) ein Schneckengetriebe ist, wobei ein Schneckenrad (15) des Schneckengetriebes die Ritzelwelle (13) konzentrisch umgibt und mit dieser drehfest verbunden ist.

10. Zahnstangenlenkung nach einem der Ansprüche 4 bis 9, **dadurch gekennzeichnet, dass** das Lenkgetriebegehäuse (10) einteilig mit dem Antriebgetriebegehäuse, in dem das Untersetzungsgetriebe (11) aufgenommen ist, ausgestaltet ist.

## Claims

1. Method for assembling a rack-and-pinion steering gear of a rack-and-pinion steering system which comprises a pinion shaft (13) connected to a steering shaft (2), which pinion shaft comprises a steering pinion (8) which is in engagement with a rack (5) for pivoting steerable wheels (7), and wherein the rack-and-pinion steering system comprises an electric motor (12) which drives the pinion shaft (13) via a reduction gear (11), **characterized in that** the steering shaft (2), the pinion shaft (13) with the steering pinion (8) and the reduction gear (11) form a collective arrangement which is accommodated in a steering gear housing (10), wherein the pinion shaft (13) comprises, between the steering pinion (8) and an end (1300) remote from the steering shaft, a narrowed portion (17) whose diameter is smaller than that of the steering pinion (8), wherein the following method steps are provided:
a) introducing the pinion shaft (13) into a housing opening, provided for the same, of the steering gear housing (10), specifically such that the region of the narrowed portion (17) of the pinion shaft (13) is situated at the level of the rack (5) to be inserted
b) introducing the rack (5) into the housing opening, provided for the same, of the steering gear housing (10), wherein the rack (5) is pushed past the narrowed portion (17) of the pinion shaft (13) into a setpoint position
c) moving the pinion shaft (13) further into the steering gear housing (10) as far as an end position, such that a toothing region (9) of the rack (5) enters into engagement with the toothing of the steering pinion (8).

2. Method according to Claim 1, **characterized in that** the diameter of the narrowed portion (17) is smaller than the diameter of the rest of the pinion shaft (13).

3. Method according to either of the preceding claims, **characterized in that**, after step c), the reduction gear (11) is introduced, at that end (1300) of the pinion shaft (13) which is remote from the steering shaft, into the steering gear housing (10).

4. Rack-and-pinion steering system for a motor vehicle, comprising a pinion shaft (13) connected to a steering shaft (2), which pinion shaft comprises a steering pinion (8) which is in engagement with a rack (5), which rack is mounted in a housing (10) so as to be displaceable along a longitudinal axis, in order to pivot steerable wheels (7), and having an electric motor (12) which drives the pinion shaft (13) via a reduction gear (11), wherein the steering shaft (2), the pinion shaft (13) with the steering pinion (8) and the reduction gear (11) form a collective arrangement which is accommodated in a steering gear housing (10), wherein the pinion shaft (13) comprises, between the steering pinion (8) and an end (1300) remote from the steering shaft, a narrowed portion (17) whose diameter is smaller than that of the steering pinion (8), such that, during the assembly of the rack-and-pinion steering gear (4), the rack (5) can be pushed into the steering gear housing (10) past the narrowed portion (17) of the pinion shaft (13) into an end position, wherein the pinion shaft (13) is, between the steering pinion (8) and the reduction gear (11), mounted rotatably in the steering gear housing (10) in a bearing (14), **characterized in that** the pinion shaft (13) comprises, between the steering pinion (8) and the bearing (14), the narrowed portion (17), whose diameter is smaller than that of the steering pinion (8) and of a bearing seat (140) of the bearing (14).

5. Rack-and-pinion steering system according to Claim 4, **characterized in that** the narrowed portion (17) directly adjoins the steering pinion (8) on the pinion shaft (13).

6. Rack-and-pinion steering system according to Claim 4, **characterized in that** the diameter of the narrowed portion (17) is smaller than the diameter of the rest of the pinion shaft (13).

7. Rack-and-pinion steering system according to any of Claims 4 to 6, **characterized in that** the electric motor (9) and the reduction gear (11) are arranged on the underside of the steering gear (4) at the end (1300) remote from the steering shaft.

8. Rack-and-pinion steering system according to any of Claims 4 to 7, **characterized in that** the pinion shaft (13) is, at its end (130) close to the steering shaft, connected to a torsion bar (115) which connects the pinion shaft (13) to an input shaft (113), wherein the torsion bar (115) is part of a torque sensor (114) which determines the steering moment that has to be applied to a steering wheel (3) in order to activate the electric motor (9) and wherein the reduction gear (11) and the electric motor (9) are arranged on the opposite side of the rack (5) in relation to the torque sensor (114).

9. Rack-and-pinion steering system according to any of Claims 4 to 8, **characterized in that** the reduction gear (11) is a worm gear, wherein a worm wheel (15) of the worm gear concentrically surrounds, and is connected rotationally conjointly to, the pinion shaft (13).

10. Rack-and-pinion steering system according to any of Claims 4 to 9, **characterized in that** the steering gear housing (10) is formed as a single piece with the drive gear housing in which the reduction gear (11) is accommodated.

## Revendications

1. Procédé de montage d'un mécanisme d'une direction à crémaillère, laquelle direction comprend un arbre de pignon (13) doté d'un pignon de direction (8) et relié à un arbre de direction (2), lequel pignon s'engrène avec une crémaillère (5) pour le pivotement de roues directrices (7), et dans lequel la direction à crémaillère comprend un moteur électrique (12) qui entraîne l'arbre de pignon (13) par le biais d'un réducteur de vitesse (11), **caractérisé en ce que** l'arbre de direction (2), l'arbre de pignon (13) doté du pignon de direction (8) et le réducteur de vitesse (11) forment un ensemble global, lequel est reçu dans un carter de mécanisme de direction (10), l'arbre de pignon (13) comprenant, entre le pignon de direction (8) et une extrémité (1300) éloignée de l'arbre de direction, un rétrécissement (17) dont le diamètre est inférieur à celui du pignon de direction (8), les étapes de procédé suivantes étant prévues :
a) introduction de l'arbre de pignon (13) dans une ouverture de carter, prévue à cet effet, du carter de mécanisme de direction (10) et ce jusqu'à ce que la région du rétrécissement (17) de l'arbre de pignon (13) se trouve à hauteur de la crémaillère (5) à insérer
b) introduction de la crémaillère (5) dans l'ouverture de carter, prévue à cet effet, du carter de mécanisme de direction (10), la crémaillère (5) étant poussée au-delà du rétrécissement (17) de l'arbre de pignon (13) jusque dans une position de consigne
c) déplacement de l'arbre de pignon (13) plus profondément dans le carter de mécanisme de direction (10) jusqu'à une position finale, de sorte qu'une région de denture (9) de la crémaillère (5) vienne en engrènement avec la denture du pignon de direction (8).

2. Procédé selon la revendication 1, **caractérisé en ce que** le diamètre du rétrécissement (17) est inférieur au diamètre du reste de l'arbre de pignon (13).

3. Procédé selon l'une des revendications précédentes, **caractérisé en ce qu'**après l'étape c), le réducteur de vitesse (11) est introduit dans le carter de mécanisme de direction (10) à l'extrémité (1300), éloignée de l'arbre de direction, de l'arbre de pignon (13).

4. Direction à crémaillère pour un véhicule automobile, comportant un arbre de pignon (13) relié à un arbre de direction (2), lequel arbre de pignon comprend un pignon de direction (8), lequel s'engrène avec une crémaillère (5) montée mobile le long d'un axe longitudinal dans un carter (10) pour le pivotement de roues directrices (7), et comportant un moteur électrique (12) qui entraîne l'arbre de pignon (13) par le biais d'un réducteur de vitesse (11), dans laquelle l'arbre de direction (2), l'arbre de pignon (13) doté du pignon de direction (8) et le réducteur de vitesse (11) forment un ensemble global, lequel est reçu dans un carter de mécanisme de direction (10), dans laquelle l'arbre de pignon (13) comprend, entre le pignon de direction (8) et une extrémité (1300) éloignée de l'arbre de direction, un rétrécissement (17) dont le diamètre est inférieur à celui du pignon de direction (8), de telle sorte que lors du montage du mécanisme de direction à crémaillère (4), la crémaillère (5) puisse être déplacée au-delà du rétrécissement (17) de l'arbre de pignon (13), dans une position finale dans le carter de mécanisme de direction (10), dans laquelle l'arbre de pignon (13) est monté de manière rotative dans un palier (14) dans le carter de mécanisme de direction (10) entre le pignon de direction (8) et le réducteur de vitesse (11), **caractérisée en ce que** l'arbre de pignon (13) comprend, entre le pignon de direction (8) et le palier (14), le rétrécissement (17) dont le diamètre est inférieur à celui du pignon de direction (8) et d'un support de palier (140) du palier (14).

5. Direction à crémaillère selon la revendication 4, **caractérisée en ce que** le rétrécissement (17) se raccorde directement au pignon de direction (8) sur l'arbre de pignon (13).

6. Direction à crémaillère selon la revendication 4, **caractérisée en ce que** le diamètre du rétrécissement (17) est inférieur au diamètre du reste de l'arbre de pignon (13).

7. Direction à crémaillère selon l'une des revendications 4 à 6, **caractérisée en ce que** le moteur électrique (9) et le réducteur de vitesse (11) sont disposés sur le côté inférieur du mécanisme de direction (4) à l'extrémité (1300) éloignée de l'arbre de direction.

8. Direction à crémaillère selon l'une des revendications 4 à 7, **caractérisée en ce que** l'arbre de pignon (13) est, à son extrémité (130) proche de l'arbre de direction, relié à une barre de torsion (115) qui relie l'arbre de pignon (13) à un arbre d'entrée (113), la barre de torsion (115) faisant partie d'un capteur de couple (114) qui détermine le couple de braquage appliqué à un volant de direction (3) et nécessaire à la commande du moteur électrique (9), et le réducteur de vitesse (11) et le moteur électrique (9) étant disposés sur le côté de la crémaillère (5) opposé au capteur de couple (114).

9. Direction à crémaillère selon l'une des revendications 4 à 8, **caractérisée en ce que** le réducteur de vitesse (11) est une transmission à vis sans fin, une roue hélicoïdale (15) de la transmission à vis sans fin entourant concentriquement l'arbre de pignon (13) et étant reliée de manière solidaire en rotation à celui-ci.

10. Direction à crémaillère selon l'une des revendications 4 à 9, **caractérisée en ce que** le carter de mécanisme de direction (10) est configuré d'une seule pièce avec le carter de transmission d'entraînement dans lequel le réducteur de vitesse (11) est reçu.
